# EUROPEAN PATENT SPECIFICATION

(11) **EP 0 883 116 B1**
(45) Date of publication and mention of the grant of the patent: **13.02.2008**
(21) Application number: 98304398.5
(22) Date of filing: 03.06.1998
(51) Int. Cl.: G11B 7/24, G11B 7/00

(54) **Optical recording media**
Optische Aufzeichnungsmedien
Support d'enregistrement optique

(30) Priority: 03.06.1997 JP 14549197
(43) Date of publication of application: 09.12.1998
(73) Proprietor: NEC CORPORATION, Tokyo (JP)
(72) Inventor: Okada, Mitsuya, Minato-ku, Tokyo (JP); Itoh, Masaki, Minato-ku, Tokyo (JP); Ohkubo, Syuichi, Minato-ku, Tokyo (JP)
(74) Representative: W.P. Thompson & Co.

(56) References cited:
- EP-A- 0 574 025
- EP-A- 0 630 007
- EP-A- 0 766 240
- EP-A- 0 847 049
- EP-A- 0 849 729
- US-A- 5 587 216
- PATENT ABSTRACTS OF JAPAN vol. 096, no. 002, 29 February 1996 -& JP 07 262610 A (ASAHI CHEM IND CO LTD), 13 October 1995 -& DATABASE WPI Section EI, Week 9551 Derwent Publications Ltd., London, GB; Class T03, AN 95-396613 XP002086712 & JP 07 262610 A, 13 October 1995
- PATENT ABSTRACTS OF JAPAN vol. 096, no. 006, 28 June 1996 -& JP 08 045076 A (ASAHI CHEM IND CO LTD), 16 February 1996
- PATENT ABSTRACTS OF JAPAN vol. 017, no. 637 (P-1650), 25 November 1993 -& JP 05 205316 A (NIPPONDENSO CO LTD), 13 August 1993

## Description

The present invention relates to optical data recording media for the high density recording, reproducing and erasing of data with a laser beam. A particular optical data recording media to be described below by way of example has an inter-crystalline-amorphous structure and optical characteristics which vary in dependence upon the thermal hysteresis differences which result from its temperature rise or fall caused by laser beam irradiation.

Optical disc recording systems using laser beams permit high capacity recording and contact-free fast accessing, and there is an increasing trend for their application to high capacity memories. Optical discs are classified into those for reproduction, or read-only type, known as compact discs and laser discs, those of the write-once type, capable of recording by users themselves, and the re-writable type capable of repeated recording and erasing by the user. Optical discs of the write-once and re-writable types are used as external memories for computers and document/image files.

Among re-writable optical discs are phase change type optical discs utilizing the phase changes of recording films, and magneto-optical discs utilizing changes in the magnetizing direction of perpendicularly magnetized films. The phase change type optical discs do not require any external magnetic field and readily permit over-writing, and are thus expected to become the main type of re-writableoptical discs.

Commonly termed phase change type optical discs, which are well known in the art, use recording films capable of undergoing inter-crystalline-amorphous phase changes in response to laser beam irradiation and are re-writable. In the phase change type optical disc, data is recorded as inter-crystalline-amorphous phase changes caused by locally elevating the recording film temperature by the irradiation of the recording film by a laser beam spot of high power corresponding to the data to be recorded, and the recorded data is reproduced by reading optical constant changes accompanying it, as reflected light intensity differences or phase changes, with a low power laser beam.

For example, in a phase change optical disc using a recording film of a relatively long crystallization time, the recording film of the disc is elevated in temperature beyond the melting point in response to laser beam irradiation, and the irradiated film portions are made non-crystal by fast cooling them after the laser beam has passed, thereby effecting the recording of data. When erasing data, the recording film is crystallized by holding the recording film temperature for a period of time sufficient for crystallization to proceed in a crystallizable temperature range above the crystallizing temperature and below the melting point. In a well-known method, a laser beam which is elongate in the direction of its process is used for irradiation. In the case of two-beam pseudo over-writing for recording new data while erasing the data having been recorded, an oval laser beam for erasing is irradiated prior to the irradiation with the oval laser beam for recording.

In the case of a disc using a recording film capable of being crystallized fast, a single circularly converged laser beam is used. In a well-known method, the laser beam power is changed between two levels for crystallization or non-crystallization. Specifically, when the recording film has been irradiated with a laser beam which can elevate the recording film temperature beyond the melting point, the largest portion of it becomes amorphous at the time of the cooling. On the other hand, portions of the recording film, which have been irradiated with a laser beam of such power that the recording film can reach a temperature above the crystallizing temperature and below the melting point, are in the crystal state.

The recording film of the phase change type disc may formed by using a charcogenite material, e.g., those of GeSbTe type, InSbTe type, InSe type, InTe type, AsTeGe type, TeOₓ-GeSn type, TeSeSn type, SbSeBi type, or BiSeGe type, etc. Using either material, the film may be formed by a resistance heating vacuum deposition process, an electron beam vacuum deposition process, or a sputtering process, etc. Right after its formation, the recording film is in a sort of amorphous state, and it is initialized to make it entirely crystalline for forming amorphous record portions by recording data on it. The recording is effected by forming amorphous portions of the film in the crystallized state thereof.

A previous means for high density data recording on an optical disc combined mark edge recording and land/groove recording.

There are well-known reflectance difference reproduction type media which are of a type for recording amorphous marks in a high reflectance crystalline portion and which have a high reflectance difference between the crystalline and non-crystalline portions. In an application of such a reflectance difference reproduction medium for mark edge recording, the absorption of the crystalline portion is considerably lower than that of the amorphous portion, because of the absence of light transmitted through the medium. Therefore, recording mark distortion is not small in high linear speed over-writing.

To overcome this drawback, a commonly termed phase difference reproduction type phase change optical disc has been proposed in which the optical phase difference between crystalline and amorphous portions is reduced and the reflectance difference between the two portions is increased (as disclosed in, for instance, Japanese Laid-Open Patent Publication No. 7-93804). However, in this system it is necessary to set the phase difference in the neighbourhood of 180 degrees. This means that it is necessary accurately to control the thicknesses of the individual layers of the medium so as to realize a desired phase difference.

Japanese patent application which was published under number 07262610 on October 13 1995, against which claim 1 is delimited, describes a recording medium which was designed to improve the rate of erasure during overwriting and to reduce jitter, and which included successive layers on a substrate of an optical layer, a recording layer, a first and a second protective layer, and a reflective layer with defined relationships between the refractive indices of the optical or base layer, the substrate and the first protective layer, in which the refractive index of the base optical layer was lower than that of the substrate.

In the specification of a European patent application which was published under number 574025 on December 15 1993, there was disclosed an optical recording medium including a recording layer consisting essentially of A, B, C, M1 and M11, wherein A is Ag and/or An, B is In, C is Te and/or Se, M1 is Sb and, or Bi, and M11 is at least one element selected from the group consisting of Ti, Zr,Hf, V, Nb, Ta, Mn, W and Mo. The recording medium was said, in one arrangement to include a lower dielectric layer, the recording medium, an upper dielectric layer, a reflective layer and a protective layer, the lower dielectric layer including at least one laminate consisting of two dielectric laminae having different refractive indices. The refractive index of the ground layer had a refractive higher than that of the protective layer.

In the specification of a European Patent application which was published on June 10 1999 under the number 847049 (priority date 5.12.1996), there was described an optical information recording medium having a substrate with periodically wobbling guide grooves, and a ground layer for improving durability which had substantially the same refractive index as the substrate.

It was suggested in this prior proposal that it was advisable to separate the lower protective layer 3 into two layers of a first lower protective layer and a second lower protective layer.

Designing of the proposed multilayer structure, except the first lower protective layer was made preferentially taking the optical properties into consideration, and the thickness of the second lower protective layer was adjusted to be thinner by more than 0 nm and not more than 30 nm, preferably from 2 to 30 nm, than the thickness at the minimum point of reflectance.

The thickness of the lower proective layer was at least 70 nm in the total of the first lower protective layer and the second lower protective layer. This structure was used to increase the mechanical strength and to improve the repetitive overwriting durability.

By adjusting the refractive index of the first lower protective layer and the refractive index of the substrate to be substantially equal it was said to become possible to freely design the film thickness independently from optical design.

Namely, it was possible to optimise the optical requirements and the durability requirements independently from each other.

Since a typical polycarbonate resin substrate has a refractive index of 1.55 it was said to be advisable to use a dielectric material having a refractive index of from 1.5 to 1.6.

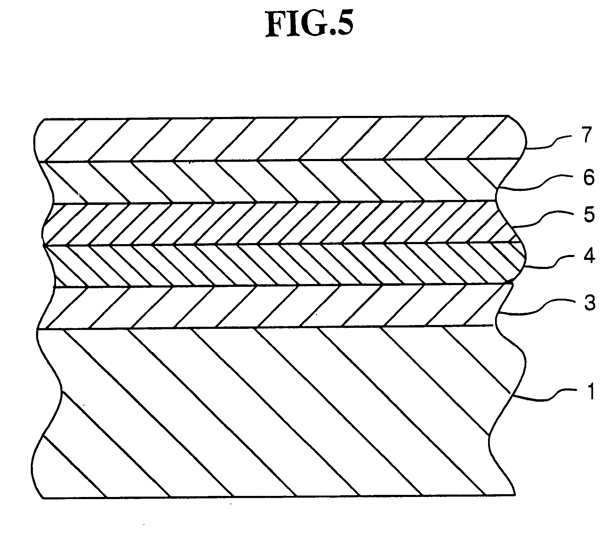

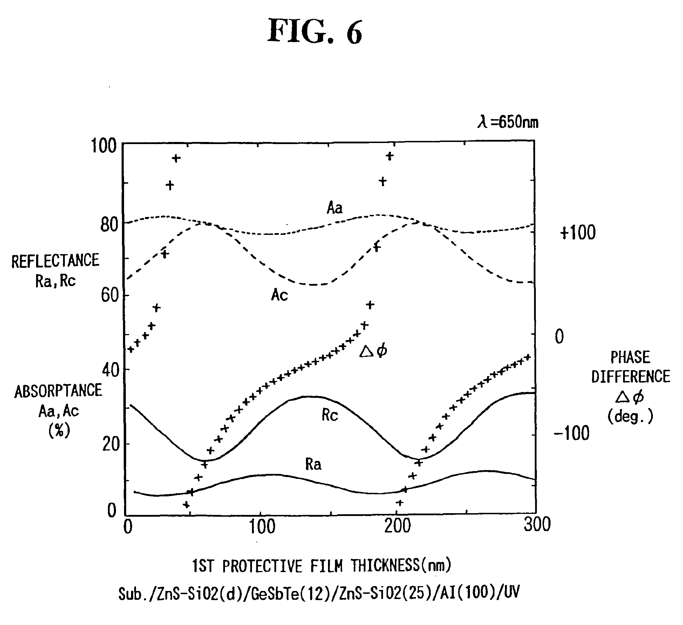

Reference will now be made to Figs. 5 and 6 of the accompanying drawings in which:-
Fig. 5 shows the structure of a previously proposed phase difference reproduction type optical data recording medium, and
Fig. 6 shows the optical characteristic of reflectance absorption and optical phase difference of the previously proposed optical data recording medium.

Fig. 5 shows the structure of a previously proposed phase difference reproduction type medium. As shown, the structure is a laminate of a substrate 1, a first protective film 3, a recording film 4, a second protective film 5, a reflective film 6 and a protective region (or ultraviolet-setting resin) 7. The optical characteristic of this medium is shown in Fig. 6. As is seen from Figs. 5 and 6, to realize a phase difference of 180 degrees which provides the utmost effect in the phase difference reproduction, the thickness of the first protective film may be set in the neighbourhood of 45 or 195 nm. However, the thickness margins are narrow. From the standpoint of the thickness control in the film formation, the thickness of the first protective film is suitably 60 nm. With this structure, however, the substrate is thermally damaged by heating when recording data. Therefore, the structure is inadequate for repeated use.

In land/groove recording, as the other effective high density recording means, it is necessary to make even the amplitude levels of reproduced signals from groove and groove tracks of track guide grooves. To realize this, it is required accurately to set the inter-crystalline-amorphous optical phase difference in the neighbourhood of zero degrees with the reflectance reproduction type medium, and in the neighbourhood of 180 degrees with the phase difference reproduction type medium. With the well-known medium having a structure as shown in Fig. 5, it is inevitable that there be set a large thickness of the first protective layer (in the neighbourhood of 170 nm in the case of the first protective film in Fig. 6, for instance), and in this case the thickness variations for the first protective film greatly influence the phase difference.

EP-A-0849 729 (which was published on 24 June 1998, and claims the priority dates of 16 December 1996, 27 March 1997 and 16 July 1997) discloses an optical recording medium having a high hardness layer, first dielectric layer, recording layer, second dielectric layer and reflective layer. The hardness of the high hardness layer is larger than the hardness of the first dielectric layer, and the thickness of the second dielectric layer is in the range of 3 to 50 nm. The refractive index of the high hardness layer is lower than that of the first dielectric layer and higher than that of the substrate. The medium is arranged such that data may be recorded in both lands and grooves.

Features of an optical data recording medium to be described below by way of example in illustration of the invention are that it can minimise the above drawbacks, improve the over-writing characteristics of phase change type optical discs, permit high density recording, and have a selected medium structure capable of being readily formed while executing desired optical control characteristics.

In a particular arrangement to be described below, by way of example as being helpful in understanding the present invention, there is provided an optical data recording medium utilizing reversible inter-crystalline-amorphous phase changes for recording, reproducing and erasing data as phase changes of a recording film caused by laser beam irradiation, including a transparent substrate having tracking guide grooves for laser beam tracking, a base film on the substrate, a first protective film on the base film , a phase change type recording film on the first protective film, a second protective film on the recording film , and a reflecting film on the second protective film, the refractive index of the base film being lower than the refractive index of the first protective films characterised in that the refractive index of the base film is higher than and close to the refractive index of the substrate at the wavelength of the laser beam, and the medium being arranged such that the data may be recorded in both land and groove parts of the tracking guide grooves, and in that the thinckness of the base film is thicker than the thickness of the first protective film is thicker than the thickness of the first protective film The phase difference between reflected light beams from crystalline and amorphous portions of the recording film is set in the neighbourhood of 0 degrees. The phase difference between reflected light beams from crystalline and amorphous portions of the recording film is set in the neighbourhood of 180 degrees. The optical data recording medium further includes a protective resin formed on the reflecting film.

The first protective film is formed using ZnS-SiO₂ and the substrate is formed using a polycarbonate resin having refractive indices of 2.10 and 1.59, respectively at a wavelength of 650 nm.

The substrate is formed by using disc-like glass or plastics of one of reinforced glass, polycarbonate resin, PMMA resin and polyolefin resin. The base film is a material having a refractive index close to that of the transparent substrate selected from among SiO₂, MgF₂, CaF₂, NaF, Na₃AlF₆, LiF, A1₂0₃, CeF₃, MgO, SiO, ThO₂, PbF₂, SnO₂ and La₂O₃. The first and second protective films are formed by using dielectric materials selected from among SiO₂, Si₃N₄, AlN, TiO₂, ZnS and ZnS-SiO₂. The recording film is formed by using charcogenite materials selected from among the GeSbTe type, InSbTe type, InSe type, InTe type, AsTeGe type, TeOₓ-GeSn type, TeSeSn type, SbSeBi type and BiSeGe type. The reflecting film is formed by using metals or transparent high refractive index materials selected from among Al, Ai-Ti, Al alloys, Au, Ag, Si and Ge.

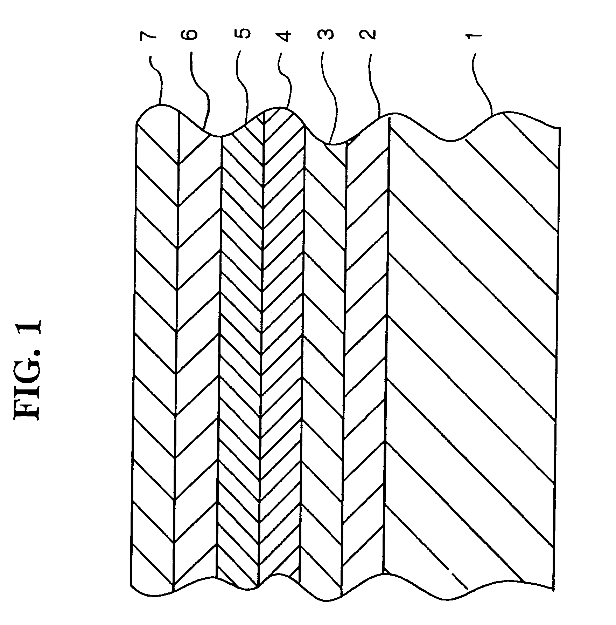

The following description and drawings disclose in Figs. 1 to 4, by means of an example, the invention which is characterised in the appended claims, whose terms determine the extent of the protection conferred hereby.

It will be understood that arrangements to be described in which the base film is of SiO₂ and the substrate is of polycarbonate do not fall within the scope of the protection sought by the claims. They are included in the belief that they will be helpful in enabling the invention to be understood better.

In the drawings:-
Fig. 1 is a schematic sectional view of an optical data recording medium,

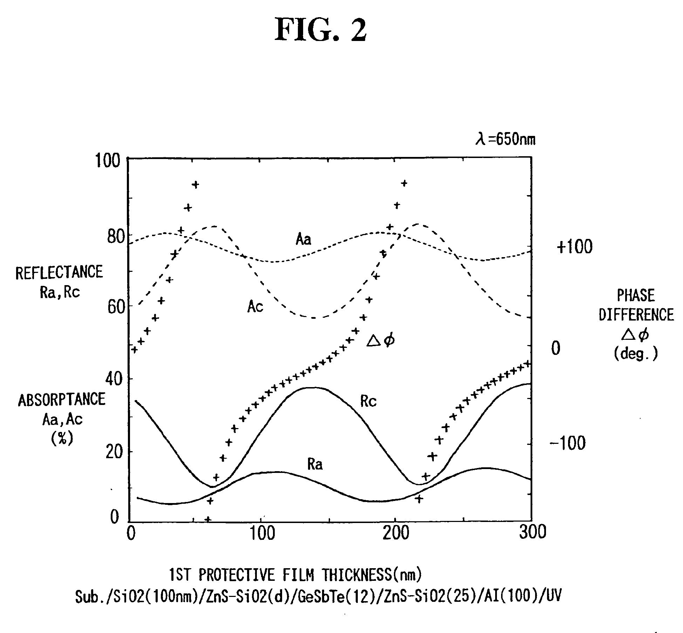

Fig. 2 shows optical characteristics illustrating the reflectance absorption and the optical phase difference of the optical data recording medium shown in Fig. 1, and

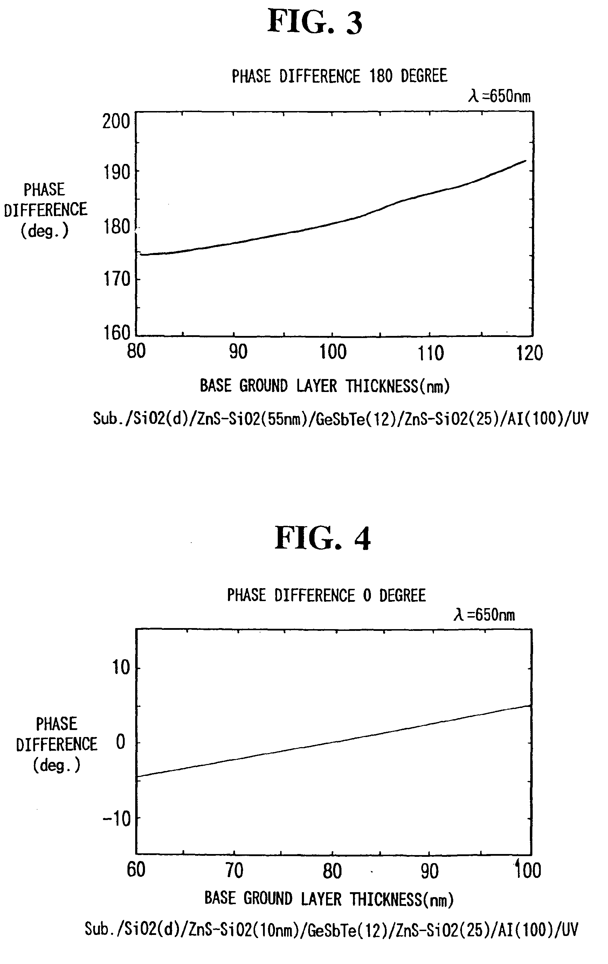

Figs. 3 and 4 are graphs showing the relationship between the film thickness and the optical phase difference of the optical data recording medium of Fig. 1.

The design principles of the optical data recording medium shown in Fig. 1 will first be described. In principle, a base film is formed on a transparent substrate, and then a first protective film is formed. The base film is desirably formed by selecting a material, which has a refractive index optically lower than that of the first protective film and close to that of the substrate. For example, when using ZnS-SiO₂ for the first protective film and a polycarbonate resin for the substrate, the refractive indices of ZnS-SiO₂ and the substrate resin are 2.10 and 1.59, respectively, at a wavelength of 650 nm. In this case, SiO₂ which usually has a reflective index of 1.46 may be selected for the base film.

Referring to Fig. 1, the structure of the optical data recording medium is a laminate including a substrate 1, a base film 2, a first protective film 3, a recording film 4, a second protective film 5, a reflecting film 6 and a protective resin (ultraviolet-setting resin) 7. It is possible for the thickness of the first protective film, of ZnS-SiO₂ for instance, to be small by using a material having optical constants close to those of the substrate.

With the previously proposed structure, it was impossible to ensure repeat over-writing resistance by setting the thickness between the recording film and the substrate to a value smaller than 100 nm. Therefore, when it was desired to set the inter-crystalline-amorphous phase difference to 180 degrees, as shown in Fig. 5, it was necessary to control the film formation accurately such that the thickness of the first protective film was in the neighbourhood of 200 nm. Also, when it was desired to set the phase difference in the neighbourhood of 0 degrees, the film formation had to be accurately controlled such that the thickness of the first protective film was in the neighbourhood of 170 nm.

In order to prevent damage to the substrate in over-writing, the base layer may be formed in the embodiment illustrative of the present invention being described such that it is relatively thin, and also a degree of freedom is provided for the thickness setting. It is thus possible to select a small thickness for the first protective film, which permits satisfactory control of the film setting at the time of the film formation.

Fig. 2 shows optical characteristics of reflectance absorption and optical phase difference of the optical data recording medium of Fig. 1, with an optical design for example including the lamination of a polycarbonate substrate, a SiO₂ base film, a ZnS-SiO₂ first protective film, a GeSbTe recording film, a ZnS-SiO₂ second protective film, an Al reflecting film and an ultraviolet-setting protective resin. It will be seen from the Figure that when a base film thickness of 100 nm is selected, a first protective film thickness of 55 nm can be selected to obtain a medium with a phase difference of 180 degrees. Also, a first protective film thickness of 10 nm can be selected to obtain a medium with a phase difference of 0 degrees.

Figs. 3 and 4 show variations in the optical phase difference of a reflected beam with base film thickness variations in the case in which SiO₂ is selected for the base film. With the previously proposed structure shown in Fig. 5, in the case of setting the protective film thickness such that the phase difference was 180 degrees, a protective film thickness variation of 10 nm resulted in a phase difference variation of about 30 degrees. In contrast, in the embodiment shown in Fig. 1, in the case in which the protective film thickness is set such that the phase difference is 180 degrees, the phase difference variation with a base film thickness variation of 10 nm can be held within about 4 degrees. With the previously proposed structure in the case in which the protective film thickness was set such that the phase difference was 0 degrees, a protective film thickness variation of 10 nm resulted in a phase difference variation of about 17 degrees. In contrast, in the arrangement shown in Fig. 1, in the case in which the protective film thickness is set such that the phase difference is 0 degrees, the phase difference variation with a base film thickness variation of 100 nm can be held within 2.4 degrees. It will be appreciated that with the arrangement described in Fig. 1, it is possible to obtain an optical data recording medium which has broadfilm formation margin and excellent film formation reproducibility compared to the previously proposed structure.

Referring again to Fig. 1, the illustrated optical data recording medium includes a transparent substrate 1 having tracking guide grooves for laser beam tracking, a base film 2 formed on the substrate 1, a first protective film 3 formed on the base film 2, a phase change type recording film 4 formed on the first protection film 3, a second protective film 5 formed on the recording film 4, and a reflecting film 6 formed on the second protective film 5. Ultraviolet-setting resin 7 is coated for protection purposes on the reflecting film 6.

The substrate 1 is formed by using disc-like glass or plastics, preferably reinforced glass, polycarbonate resin, PMMA resin or polyolefin resin.

As previously described, for the base film 2 there may be used a material having a refractive index lower than that of the first protective film 3. Preferably the material has a refractive index close to that of the transparent substrate, e.g., SiO₂, MgF₂, CaF₂, NaF, Na₃AlF₆, LiF, A1₂0₃, CeF₃, MgO, SiO, ThO₂, PbF₂, Sn0₂, and La₂O₃, etc.

The first and second protective films 3 and 5 are formed by using dielectric materials, e.g., SiO₂, Si₃N₄, AlN, TiO₂, ZnS, and ZnS-SiO₂, etc.

The recording film 4 is formed by using charcogenite materials, e.g., those of GeSbTe type, InSbTe type, InSe type, InTe type, AsTeGe type, TeOₓ-GeSn type, TeSeSn type, SbSeBi type, and BiSeGe type, etc.

The reflecting film 6 may be formed by using metals or transparent high refractive index materials, preferably Al, Ai-Ti, Al alloys, Au, Ag, Si, or Ge, etc.

A land/groove recording type medium was obtained by setting the working laser wavelength to 650 nmn, with a structure equivalent to that shown in Fig. 1, setting a high reflectance index and setting the phase difference to 0 degrees. As the substrate 1, there was used a polycarbonate substrate with a pre-groove, having a diameter of 120 mm and a thickness of 0.6 mm. For the substrate there was used a substrate of a type suitable for both land and groove recording, having a track pitch of 0.56 µm (with both land and groove widths of 0.56 µm) and a groove depth of 55 nm. The base film 2 was formed by using SiO₂, the first and second protective films 3 and 5 were formed by using a ZnS-Si0₂ mixture film (with a refractive index of 2.10), the recording film 4 was formed by using GeSbTe, and the reflecting film 6 was formed by using Al. These films were formed continuously by a magnetron sputtering process. The thicknesses of the base, first protective, recording, second protective and reflecting films were set to 100, 10, 12, 25 and 100 nmm, respectively. Ultraviolet-setting resin ("SD-301" manufactured by Dainihon Ink) was coated to a thickness of 9.2 µm on the reflecting film.

Characteristics of the disc were evaluated by executing over-writing. Measurements were made by using an optical head on which a semiconductor laser with a wavelength of 650 nm and an objective lens with an NA of 0.60 were mounted. Signals at 8.5 and 2.13 MHz were over-written alternately in a grooved part of the groove track with a radius of 45 mm by rotating the disc after initialization at a linear speed of 5.8 m/s. The recording and erasing power levels were set to 7 and 4mW, respectively, to minimize second order harmonic distortion of the reproduced signal. At 2.13 MHz a reproduced signal level was obtained with a reproduction power level of 1 mW, and an amplitude of 160 mvp-p. Under the same conditions, alternate over-writing of 8.5 and 2.13 MHZ signals was carried out in a grooved part of the groove track with a radius of 45 mm. At 2.13 MHz a reproduced signal level was obtained with an amplitude of 165 mVp-p. Balanced signal levels with the land and groove tracks could thus be confirmed.

A land/groove recording type medium was obtained by setting the working laser wavelength to 650 nm, with a structure equivalent to that shown in Fig. 1, setting the phase difference to 180 degrees. For the substrate 1, there was used a polycarbonate substrate with a pre-groove, having a diameter of 120 mm and a thickness of 0.6 mm. As the substrate there was used a substrate of a type suitable for both land and groove recording having a track pitch of 0.56 µm (with both land and groove widths of 0.56 µm) and a groove depth of 55 nm. The base film 2 was formed by using SiO₂, the first and second protective films 3 and 5 were formed by using ZnS-Si0₂ mixture film, the recording film 4 was formed by using GeSbTe, and the reflecting film 6 was formed by using Al. These films were formed continuously by a magnetron sputtering process. The thicknesses of the base, first protective, recording, second protective and reflecting films were set to 100, 55, 12, 25 and 100 nmm, respectively. Ultraviolet-setting resin on the reflecting film was 9.2 µm thick.

Characteristics of the disc were evaluated by executing over-writing. Measurements were made by using an optical head on which a semiconductor laser with a wavelength of 650 nm and an objective lens with an NA of 0.60 were mounted. Signals at 8.5 and 2.13 MHZ were over-written alternately in a grooved part of the groove track with a radius of 45 mm by rotating the disc after initialization at a linear speed of 5.8 m/s. The recording and erasing power levels were set to 6 and 3mW, respectively, to minimize second order harmonic distortion of the reproduced signal. At 2.13 MHZ a reproduced signal level was obtained with a reproduction power level of 1 mW, and an amplitude of 145 mVp-p. Under the same conditions, alternate over-writing of 8.5 and 2.13 MHZ signals was carried out in a land track with a radius of 45 mm. At 2.13 MHZ a reproduced signal level, with an amplitude of 150 mVp-p was obtained. Balanced signal levels with the land and groove tracks could thus be confirmed.

For comparison, a land/groove recording type medium was obtained by setting the working laser wavelength to 650 nm, with a structure equivalent to that shown in Fig. 5, setting the phase difference to 0 degrees. As the substrate 1 there was used a polycarbonate substrate with a pre-groove, having a diameter of 120 mm and a thickness of 0.6 mm. As the substrate there was used a substrate of a type suitable for both land and groove recording, having a track pitch of 0.56 µm (with both land and groove widths of 0.56 µm) and a groove depth of 55 nm. The first and second protective films 3 and 5 were formed by using a ZnS-SiO₂ mixture film, the recording film 4 was formed by using GeSbTe, and the reflecting film 6 was formed by using Al. These films were formed continuously by a magnetron sputtering process. The thicknesses of the first protective, recording, second protective and reflecting films were set to 170, 12, 25 and 100 nmm, respectively. An ultraviolet reflecting film was set to a thickness of 9.2 µm.

Characteristics of the disc were evaluated by executing over-writing. Measurements were made by using an optical head, on which a semiconductor laser with a wavelength of 650 nm and an objective lens with an NA of 0.60 were mounted. Signals at 8.5 and 2.13 MHZ were over-written alternately in a grooved part of a groove track with a radius of 45 mm by rotating the disc after initialization at a linear speed of 5.8 m/s. The recording and erasing power levels were set to 7.5 and 3.8 mW, respectively, to minimize second order harmonic distortion of the reproduced signal. At 2.13 MHZ a reproduced signal level was obtained with a reproduction power level of 1 mW, and an amplitude of 170 mVp-p. Under the same conditions, alternate over-writing of 8.5 and 2.13 MHZ signals was carried out in a grooved part of the groove track with a radius of 45 mm. At 2.13 MHZ a reproduced signal level, with an amplitude of 140 mVp-p was obtained. Balanced signal levels with the land and groove tracks could thus be confirmed. Subsequently, the thicknesses of the individual layers of the disc were measured with a step type thickness gauge. The thickness of the first protective film was 175 nm.

For comparison, a land/groove recording type medium was obtained by setting the working laser wavelength to 650 nm, with a structure equivalent to that shown in Fig. 5, setting the phase difference to 180 degrees. As the substrate 1 there was used a polycarbonate substrate with a pre-groove, having a diameter of 120 mm and a thickness of 0.6 mm. For the substrate there was used a substrate of a type suitable for both land and groove recording, having a track pitch of 0.56 µm (with both land and groove widths of 0.56 µm) and a groove depth of 55 nm. The first and second protective films 3 and 5 were formed by using a ZnS-SiO₂ mixture film, the recording film 4 was formed by using GeSbTe, and the reflecting film 6 was formed by using Al. These films were formed continuously by a magnetron sputtering process. The thicknesses of the first protective, recording, second protective and reflecting films were set to 200, 12, 25 and 100 nmm, respectively. An ultraviolet reflecting film was set at 9.2 µm thick.

Characteristics of the disc were evaluated by executing over-writing. Measurements were made by using a head on which a semiconductor laser with a wavelength of 650 nm and an objective lens with an NA of 0.60 were mounted. Signals at 8.5 and 2.13 MHZ were over-written alternately in a grooved part of a groove track with a radius of 45 mm by rotating the disc after initialization at a linear speed of 5.8 m/s. The recording and erasing power levels were set to 5.5 and 3mW, respectively, to minimize second order harmonic distortion of the reproduced signal. At 2.13 MHZ a reproduced signal level was obtained with reproduction power level of 1 mW, and an amplitude of 160 mVp-p. Under the same conditions, alternate over-writing of 8.5 and 2.13 MHZ signals was carried out in a grooved part of the groove track with a radius of 45mm. At 2.13 MHZ a reproduced signal level with an amplitude of 110 mVp-p was obtained. Balanced signal levels with the land and groove tracks could thus be confirmed. Subsequently, the thicknesses of the individual layers of the disc were measured with a step type thickness gauge. The thickness of the first protective film was 205 nm.

A land/groove recording type medium was obtained by setting the workinglaser wavelength to 650 nm, with a structure equivalent to that shown in Fig. 1, setting the phase difference to 0 degrees. For the substrate 1 there was used a polycarbonate substrate with a pre-groove, having a diameter of 120 mm and a thickness of 0.6 mm. As the substrate there was used a substrate of a type suitable for both land and groove recording, having a track pitch of 0.56 µm (with both land and groove widths of 0.56 µm) and a groove depth of 55 nm. The base film 2, and the first and second protective films 3 and 5 were formed by using A1₂0₃, (refractive index of 1.62) and ZnS-Si0₂ mixture film, respectively, the recording film 4 was formed by using GeSbTe, and the reflecting film 6 was formed by using Al. These films were formed continuously by a magnetron sputtering process.the thicknesses of the base, first protective, recording, second protective and reflecting films were set to 150, 20, 12, 25 and 100 nmm, respectively. The ultraviolet-setting on the reflecting film was 9.2 µm thick.

Characteristics of the disc were evaluated by executing over-writing. Measurements were made by using a head on which a semiconductor laser with a wavelength of 650 nm and an objective lens with an NA of 0.60 were mounted. Signals at 8.5 and 2.13 MHZ were over-written alternately in a grooved part of the groove track with a radius of 45 mm by rotating the disc after initialization at a linear speed of 5.8 m/s. The recording and erasing power levels were set to 8 and 4 mW, respectively, to minimize second order harmonic distortion of the reproduced signal. At 2.13 MHZ a reproduced signal level was obtained with a reproduction power level of 1 mW, and an amplitude of 190 mVp-p. Under the same conditions, alternate over-writing of 8.5 and 2.13 MHZ signals was carried out in a grooved part of a groove track with a radius of 45mm. At 2.13 MHZ a reproduced signal level with an amplitude of 195 mVp-p was obtained. Balanced signal levels with the land and groove tracks could thus be confirmed.

A land/groove recording type medium was obtained by setting the working laser wavelength to 650 nm, with a structure equivalent to that shown in Fig. 1, setting the phase difference to 0 degrees. For the substrate 1 a polycarbonate substrate with a pre-groove, having a diameter of 120 mm and a thickness of 0.6 mm, was used. As the substrate there was used a substrate of a type suitable for both land and groove recording, having a track pitch of 0.56 µm (with both land and groove widths of 0.56 µm) and a groove depth of 55 nm. The base film 2, and the first and second protective films 3 and 5 were formed by using SnO₂ (refractive index of 1.90), and ZnS-SiO₂, mixture film, respectively. The recording film 4 was formed by using GeSbTe, and the reflecting film 6 was formed by using Al. These films were formed continuously by a magnetron sputtering process. The thicknesses of the base, first protective, recording, second protective and reflecting films were set to 200, 10, 12, 25 and 100 nmm, respectively. The ultraviolet-setting on the reflecting film was 9.2 µm thick.

Characteristics of the disc were evaluated by executing over-writing. Measurements were made by using a head on which a semiconductor laser with a wavelength of 650 nm and an objective lens with an NA of 0.60 were mounted. Signals at 8.5 and 2.13 MHZ were over-written alternately in a grooved part of a groove track with a radius of 45 mm by rotating the disc after initialization at a linear speed of 5.8 m/s. The recording and erasing power levels were set to 7 and 3.4 mW, respectively, to minimize second orderharmonic distortion of the reproduced signal. At 2.13 MHZ a reproduced signal level was obtained with a reproduction power level of 1 mW, and an amplitude of 180 mVp-p. Under the same conditions, alternate over-writing of 8.5 and 2.13 MHZ signals was carried out in a grooved part of a groove track with a radius of 45mm. At 2.13 MHZ a reproduced signal level with an amplitude of 185 mvp-p was obtained. Balanced signal levels with the land and groove tracks could thus be confirmed.

A land/groove recording type medium was obtained by setting the working laser wavelength to 650 nm, with a structure equivalent to that shown in Fig. 1, setting a high reflectance difference and setting the phase difference to 0 degrees. For the substrate 1 there was used a polycarbonate substrate with a pre-groove, having a diameter of 120 mm and a thickness of 0.6 mm. As the substrate there was used a substrate of a type suitable for both land and groove recording, having a track pitch of 0.56 µm (with both land and groove widths of 0.56 µm) and a groove depth of 55 nm. The base film 2, and the first and second protective films 3 and 5 were formed by using SiO₂ and ZnS-SiO₂ (refractive index of 2.10) mixture film, respectively, the recording film 4 was formed by using GeSbTe, and the reflecting film 6 was formed by using Si. These films were formed continuously by a magnetron sputtering process. The thicknesses of the base, first protective, recording, second protective and reflecting films were set to 150, 120, 12, 15 and 100 nmm, respectively. There was an ultraviolet-setting of 9.2 µm on the reflecting film.

Characteristics of the disc were evaluated by executing over-writing. Measurements were made by using a head, on which a semiconductor laser with a wavelength of 650 nm and an objective lens with an NA of 0.60 were mounted. Signals at 3 and 3.4 MHZ were over-written alternately in a grooved part of a groove track with a radius of 45 mm by rotating the disc after initialization at a linear speed of 12.0 m/s. The recording and erasing power levels were set to 10 and 5 mW, respectively, to minimize second order harmonic distortion of the reproduced signal. At 3.4 MHZ a reproduced signal level was obtained with a reproduction power level of 1 mW, and an amplitude of 200 mVp-p. Under the same conditions, alternate over-writing of 13.5 and 3.4 MHZ signals was carried out in a grooved part of the groove track with a radius of 45 mm. At 3.4 MHZ a reproduced signal level with an amplitude of 195 mVp-p was obtained. Balanced signal levels with the land and groove tracks could thus be confirmed.

A land/groove recording type medium was obtained by setting the working laser wavelength to 650 nm, with a structure equivalent to that shown in Fig. 1, setting the phase difference to 180 degrees. For the substrate 1 there was used a polycarbonate substrate with a pre-groove, having a diameter of 120 mm and a thickness of 0.6 mm. As the substrate there was used a substrate of a type suitable for both land and groove recording, having a track pitch of 0.56 µm (with both land and groove widths of 0.56 µm) and a groove depth of 55 nm. The base film 2, and the first and second protective films 3 and 5 were formed by using SiO₂ and ZnS-SiO₂ mixture film, respectively, the recording film 4 was formed by using GeSbTe, and the reflecting film 6 was formed by using Si. These films were formed continuously by a magnetron sputtering process. The thicknesses of the base, first protective, recording, second protective and reflecting films were set to 150, 65, 12, 15 and 100 nmm, respectively. The ultraviolet-setting on the reflecting film was 9.2 µm.

Characteristics of the disc were evaluated by executing over-writing. Measurements were made by using a head on which a semiconductor laser with a wavelength of 650 nm and an objective lens with an NA of 0.60 were mounted. Signals at 13.5 and 3.4 MHZ were over-written alternately in a grooved part of a groove track with a radius of 45 mm by rotating the disc after initialization at a linear speed of 12.0 m/s. The recording and erasing power levels were set to 11 and 5.8mW, respectively, to minimize second order harmonic distortion of the reproduced signal. At 3.4 MHZ a reproduced signal level was obtained with reproduction power level of 1.5 mW, and an amplitude of 255 mVp-p. Under the same conditions, alternate over-writing of 13.5 and 3.4 MHZ signals was carried out in a grooved part of a groove track with a radius of 45 mm. At 13.4 MHZ a reproduced signal level with an amplitude of 250 mVp-p was obtained. Balanced signal levels with the land and groove tracks could thus be confirmed.

As has been described, it is possible to form a base layer having a relatively small thickness to prevent damage to the substrate in over-writing, and also to provide a degree of freedom in the thickness setting. It is thus possible to obtain an optical data recording medium, which has a broad film formation margin and excellent film formation reproducibility compared to the previously proposed structure.

The matter set forth in the foregoing description and accompanying drawings is by way of example and illustration only.

Changes in the constructions described will occur to those skilled in the art, and various modifications and embodiments may be made within the scope of the protection sought by the appended claims.

## Claims

1. An optical data recording medium utilizing reversible inter-crystalline-amorphous phase changes for recording, reproducing and erasing data as phase changes of a recording film caused by laser beam irradiation, including a transparent substrate (1) having tracking guide grooves for laser beam tracking, a base film (2) on the substrate, a first protective film (3) on the base film (2), a phase change type recording film (4) on the first protective film, a second protective film (5) on the recording film (4), and a reflecting film (6) on the second protective film, the refractive index of the base film (2) being lower than the refractive index of the first protective film (3) **characterised in that** the refractive index of the base film(2) is higher than and close to the refractive index of the substate (1) at the wavelength of the laser beam, and the medium being arranged such that data may be recorded in both land and groove parts of the tracking guide grooves, and **in that** the thickness of the base film (2) is thicker than the thickness of the first protective film (3)

2. An optical data recording medium as claimed in claim 1, wherein the phase difference between reflected light beams from crystalline and amorphous portions of the recording film (4) is set in the neighbourhood of 0 degrees.

3. An optical data recording medium as claimed in claim 1, wherein the phase difference between the reflected light beams from crystalline and amorphous portions of the recording film (4) is set in the neighbourhood of 180 degrees.

4. An optical data recording medium as claimed in claim 1, further including a protective resin (7) formed on the reflecting film (4)

5. An optical data recording medium as claimed in claim 1, wherein the first protective film (3) is formed using ZnS-SiO₂ and the substrate (1) is formed using a polycarbonate resin having refractive indices of 2.10 and 1.59, respectively at a wavelength of 650 nm.

6. An optical data recording medium as claimed in claim 1, wherein the substrate (1) is formed by using disc-like glass or plastics of one of reinforced glass, polycarbonate resin, PMMA resin, and polyolefin resin.

7. An optical data recording medium as claimed in claim 1, wherein the base film (2) is a material having a refractive index close to that of the transparent substrate (1) and selected from among SiO₂ MgF₂, CaF₂, NaF, Na₃AlF₆, LiF, A1₂0₃, CeF₃, MgO, SiO, ThO₂, PbF₂, SnO₂ and La₂O₃.

8. An optical data recording medium as claimed in claim 1, wherein the first (3) and second (5) protective films are formed by using dielectric materials selected from among SiO₂, Si₃N₄, AlN, TiO₂, ZnS and ZnS-SiO₂.

9. An optical data recording medium as claimed in claim 1, wherein the recording film (4) is formed by using charcogenite materials selected from among GeSbTe type, InSbTe type, InSe type, InTe type AsTeGe type, TeOₓ-GeSn type, TeSeSn type, SbSeBi type and BiSeGe type materials.

10. An optical data recording medium as claimed in claim 1, wherein the reflecting film (6) is formed by using metals or transparent high refractive index materials selected from among Al, Ai-Ti, and Al alloys, and Au, Ag, Si and Ge.

## Patentansprüche

1. Optisches Datenaufzeichnungsmedium, das reversible interkristallin-amorphe Phasenänderungen zur Aufzeichnung, Reproduktion und Löschen von Daten als Phasenänderungen eines Aufzeichnungsfilms verwendet, die durch Laserstrahlbestrahlung verursacht werden, wobei das Medium Folgendes umfasst: ein transparentes Substrat (1), das Spurführungsrillen für die Laserstrahlspurbildung aufweist, einen Basisfilm (2) auf dem Substrat, einen ersten Schutzfilm (3) auf dem Basisfilm (2), einen Aufzeichnungsfilm (4) des Phasenänderungstyps auf dem ersten Schutzfilm, einen zweiten Schutzfilm (5) auf dem Aufzeichnungsfilm (4) und einen Reflexionsfilm (6) auf dem zweiten Schutzfilm, wobei die Brechungszahl des Basisfilms (2) niedriger ist als die Brechungszahl des ersten Schutzfilms (3) ist, **dadurch gekennzeichnet, dass** die Brechungszahl des Basisfilms (2) bei der Wellenlänge des Laserstrahls höher ist als die Brechungszahl des Substrats (1) und sich in der Nähe derselben befindet, und das Medium so angeordnet ist, dass Daten sowohl auf den Steg- als auch in den Rillenabschnitten der Spurführungsrillen aufgezeichnet werden können, und dass die Dicke des Basisfilms (2) größer ist als die Dicke des ersten Schutzfilms (3).

2. Optisches Datenaufzeichnungsmedium nach Anspruch 1, wobei die Phasendifferenz zwischen reflektierten Lichtstrahlen von kristallinen und amorphen Abschnitten des Aufzeichnungsfilms (4) benachbart zu 0 Grad eingestellt ist.

3. Optisches Datenaufzeichnungsmedium nach Anspruch 1, wobei die Phasendifferenz zwischen den reflektierten Lichtstrahlen von kristallinen und amorphen Abschnitten des Aufzeichnungsfilms (4) benachbart zu 180 Grad eingestellt ist.

4. Optisches Datenaufzeichnungsmedium nach Anspruch 1, das des Weiteren ein Schutzharz (7) umfasst, das auf dem Reflexionsfilm (4) gebildet ist.

5. Optisches Datenaufzeichnungsmedium nach Anspruch 1, wobei der erste Schutzfilm (3) unter Verwendung von ZnS-SiO₂ gebildet ist und das Substrat (1) unter Verwendung eines Polycarbonatharzes gebildet ist, das Brechungszahlen von jeweils 2,10 und 1,59 bei einer Wellenlänge von 650 nm aufweist.

6. Optisches Datenaufzeichnungsmedium nach Anspruch 1, wobei das Substrat (1) unter Verwendung eines scheibenartigen Glases oder Kunststoffs mit Glasfaserverstärkung, aus Polycarbonatharz, PMMA-Harz oder Polyolefinharz gebildet ist.

7. Optisches Datenaufzeichnungsmedium nach Anspruch 1, wobei der Basisfilm (2) ein Material ist, das eine Brechungszahl aufweist, die nahe der des transparenten Substrats (1) liegt und aus Folgendem ausgewählt wird: SiO₂, MgF₂, CaF₂, NaF, Na₃AlF₆, LiF, Al₂O₃, CeF₃, MgO, SiO, ThO₂, PbF₂, SnO₂ und La₂O₃.

8. Optisches Datenaufzeichnungsmedium nach Anspruch 1, wobei der erste (3) und zweite (5) Schutzfilm unter Verwendung dielektrischer Materialien gebildet sind, die aus Folgendem ausgewählt werden: SiO₂, Si₃N₄, AIN, TiO₂, ZnS und ZnS-SiO₂.

9. Optisches Datenaufzeichnungsmedium nach Anspruch 1, wobei der Aufzeichnungsfilm (4) unter Verwendung von Chalcogenit-Materialien gebildet ist, die aus der Gruppe bestehend aus GeSbTe, InSbTe, InSe, InTe, AsTeGe, TeOₓ-GeSn, TeSeSn, SbSeBi und BiSeGe artigen Materialien ausgewählt werden.

10. Optisches Datenaufzeichnungsmedium nach Anspruch 1, wobei der Reflexionsfilm (6) unter Verwendung von Metallen oder transparenten Materialien mit einer hohen Brechungszahl gebildet ist, die aus der Gruppe bestehend aus Al, Ai-Ti und A1-Legierungen und Au, Ag, Si und Ge ausgewählt werden.

## Revendications

1. Support d'enregistrement optique de données utilisant des changements de phase inter-cristalline-amorphe réversibles pour enregistrer, reproduire et effacer des données en tant que changements de phase d'un film d'enregistrement causés par un rayonnement de faisceau laser, comportant un substrat transparent (1) ayant des sillons de guidage d'alignement pour l'alignement du faisceau laser, un film de base (2) sur le substrat, un premier film protecteur (3) sur le film de base (2), un film d'enregistrement du type à changement de phase (4) sur le premier film protecteur, un second film protecteur (5) sur le film d'enregistrement (4), et un film réflecteur (6) sur le second film protecteur, l'indice de réfraction du film de base (2) étant inférieur à l'indice de réfraction du premier film protecteur (3) **caractérisé en ce que** l'indice de réfraction du film de base (2) est supérieur à, et proche de, l'indice de réfraction du substrat (1) à la longueur d'onde du faisceau laser, et le support étant agencé de telle sorte que les données puissent être enregistrées dans les parties à la fois d'intersillons et de sillons des sillons de guidage d'alignement et **en ce que** l'épaisseur du film de base (2) est supérieure à l'épaisseur du premier film protecteur (3).

2. Support d'enregistrement optique de données selon la revendication 1, dans lequel la différence de phase entre les faisceaux de lumière réfléchis depuis des parties cristalline et amorphe du film d'enregistrement (4) est réglée au voisinage de 0 degré.

3. Support d'enregistrement optique de données selon la revendication 1, dans lequel la différence de phase entre les faisceaux de lumière réfléchis depuis des parties cristalline et amorphe du film d'enregistrement (4) est réglée au voisinage de 180 degrés.

4. Support d'enregistrement optique de données selon la revendication 1, comportant en outre une résine de protection (7) formée sur le film réflecteur (4).

5. Support d'enregistrement optique de données selon la revendication 1, dans lequel le premier film protecteur (3) est formé en utilisant du ZnS-SiO₂ et le substrat (1) est formé en utilisant une résine de polycarbonate ayant respectivement des indices de réfraction de 2,10 et 1,59 à une longueur d'onde de 650 nm.

6. Support d'enregistrement optique de données selon la revendication 1, dans lequel le substrat (1) est formé en utilisant du verre ou du plastique en forme de disque parmi le verre armé, une résine de polycarbonate, une résine PMMA, et une résine polyoléfine.

7. Support d'enregistrement optique de données selon la revendication 1, dans lequel le film de base (2) est une matière ayant un indice de réfraction proche de celui du substrat transparent (1) et sélectionnée parmi SiO₂, MgF₂, CaF₂, NaF, Na₃AlF₆, LiF, Al₂O₃, CeF₃, MgO, SiO, ThO₂, PbF₂, SnO₂ et La₂O₃.

8. Support d'enregistrement optique de données selon la revendication 1, dans lequel les premier (3) et second (5) films protecteurs sont formés en utilisant des matières diélectriques sélectionnées parmi SiO₂, Si₃N₄, AIN, TiO₂, ZnS et ZnS-SiO₂.

9. Support d'enregistrement optique de données selon la revendication 1, dans lequel le film d'enregistrement (4) est formé en utilisant des matières de chalcogénures sélectionnées parmi les matières de type GeSbTe, de type InSbTe, de type InSe, de type InTe, de type AsTeGe, de type TeOₓ-GeSn, de type TeSeSn, de type SbSeBi et de type BiSeGe

10. Support d'enregistrement optique de données selon la revendication 1, dans lequel le film réflecteur (6) est formé en utilisant des métaux ou matières à indice de réfraction élevé transparentes sélectionnés parmi l'Al, l'Ai-Ti et alliages d'Al, et l'Au, l'Ag, le Si et le Ge.
